**Europäisches Patentamt**

**European Patent Office**

**Office européen des brevets**

(19)

(11) Publication number: **0 056 636**
**A2**

(12) # EUROPEAN PATENT APPLICATION

(21) Application number: **82100270.6**

(22) Date of filing: **15.01.82**

(51) Int. Cl.³: **G 03 B 7/099**
**G 03 B 15/05**

(30) Priority: **15.01.81 IT 4480181**

(43) Date of publication of application:
**28.07.82 Bulletin 82/30**

(84) Designated Contracting States:
**AT BE CH DE FR GB IT LI LU NL SE**

(71) Applicant: **Repetti, Giovanni**
**Via Tansini 33**
**I-29100 Piacenza(IT)**

(72) Inventor: **Repetti, Giovanni**
**Via Tansini 33**
**I-29100 Piacenza(IT)**

(74) Representative: **Prüfer, Lutz H., Dipl.-Phys.**
**Willroiderstrasse 8**
**D-8000 München 90(DE)**

(54) Device allowing TTL system automatic light measuring for close-up.

(57) Device consisting in a connection ring to be inserted between camera and lens, incorporating a photosensitive cell reading the light reflected by the film, to drive one (or more) appropriate electronic flashes, in order to obtain the correct exposure.

EP 0 056 636 A2

Croydon Printing Company Ltd.

- 1 -

## Device allowing TTL system automatic light measuring for close-up

The present invention relates to a device for sensing the light impinging onto a photosensitive member (film or the like) and transmitting a corresponding signal to a lightening control device.

It is known that in most cases the light necessary to get a correct exposure of a photosensitive film is generated by an artificial source, for instance a flash. It is also known that, depending on the enlargement or magnifying ratio, the lightening of the photosensitive member varies, and consequently there are necessary long and complicated calculations before the exposure in order to get a correct lightening. There are also known photographic cameras in which sensing devices are incorporated so as to control the source of the lightening.

The main purpose of the present invention is that of providing a device which permits the above control function to be obtained, without being incorporated in a photographic camera even after the manufacturing thereof, and independently from the type thereof, provided that the lens of the camera can be detached from the camera itself.

Such a purpose is achieved by means of a device adapted to be inserted between the lens and the camera and comprising a photosensitive cell in light communication with the photosensitive film or other member sensing the light impinging onto the photosensitive film and controlling the source of artificial lightening.

According to the preferred embodiment the device of the invention consists in a connection ring with appropriate means for the attachment according to the existing types of cameras on the market, to be positioned between lens and camera.

It incorporates a photosensitive cell properly located, in order to not interfere with the lightbeam transmission, but enabled to 'read' the light reflected by the film placed in the camera body.

The photosensitive cell can be of use to control an electronic flash, i.e. to interrupt the lightening when the right exposure is achieved.

This device allows to every lens-replaceable camera to take advantage of the same technical possibilities now at disposal of few marketed cameras in which this characteristic known as 'real time exposure', is particularly useful in macrophotography (close-up) with flash.

Of course the device of the invention can be embodied as an extension tube or other connection means between the lens and the camera body.

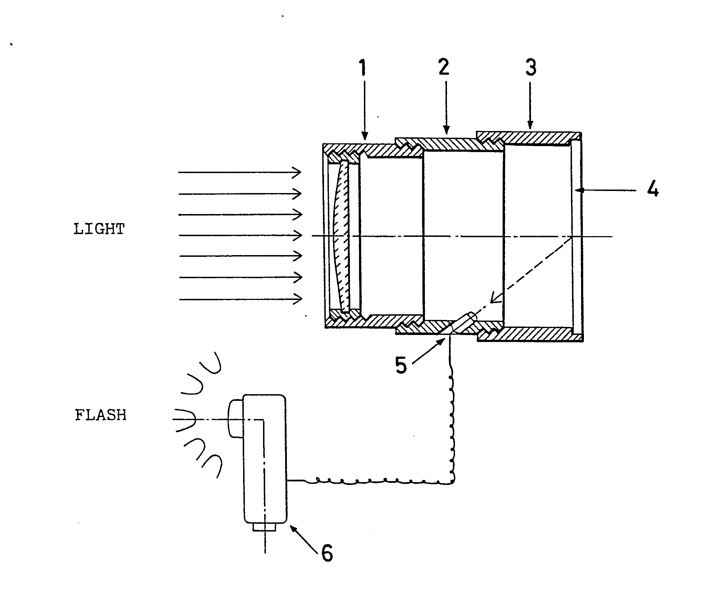

Claims:

1.    Device adapted to be inserted between the lens and the camera body and comprising a photosensitive cell in light communication with the photosensitive film or other member sensing the light impinging onto the photosensitive film and controlling the source of artificial lightening.

2.    Device according to claim 1 characterized in that the source of artificial lightening is at least an electronic flash.

LIGHT

FLASH

1 2 3

4

5

6